# EUROPÄISCHE PATENTSCHRIFT

(11) **EP 1 275 944 B1**
(45) Veröffentlichungstag und Bekanntmachung des Hinweises auf die Patenterteilung: **14.09.2005**
(21) Anmeldenummer: 02014482.0
(22) Anmeldetag: 29.06.2002
(51) Int. Cl.: G01G 21/28, G01G 23/00

(54) **Waage mit Antenne zum Abfragen von Wägenobjekten mit Transpondern**
Weighing device with antenna for requesting the weight of objects equipped with transponders
Balance avec antenne permettant d'interroger des objets à peser équipée avec de transpondeurs

(30) Priorität: 13.07.2001 DE 10134281
(43) Veröffentlichungstag der Anmeldung: 15.01.2003
(73) Patentinhaber: SARTORIUS AG, 37075 Göttingen (DE)
(72) Erfinder: Oldendorf, Christian, 37077 Göttingen (DE)

(56) Entgegenhaltungen:
- EP-A- 0 589 534
- WO-A-00/62263
- DE-U- 29 914 925
- FR-A- 2 819 310
- GB-A- 603 210

## Beschreibung

Die Erfindung bezieht sich auf eine Waage mit einer Waagschale, mit einem Wägeaufnehmer, mit einem Gehäuse, das den Wägeaufnehmer umschließt, und mit einer Antenne zur Identifikation eines mit einem Transponder ausgerüsteten Wägeobjektes.

Waagen dieser Art sind z. B. aus der DE 299 14 925 U1 bekannt. Dort ist die Antenne in einer vertikalen Ebene seitlich oberhalb der Waagschale angeordnet. Diese Anordnung beschränkt jedoch die maximale Größe der Wägeobjekte, da die Antenne als seitlicher Anschlag wirkt und große Wägeobjekte nicht weit genug auf die Waagschale geschoben werden können. Bei kleinen Wägeobjekten verleitet die seitliche Anordnung der Antenne dazu, die Wägeobjekte nahe zur Antenne und damit außermittig auf der Waagschale zu platzieren. Dadurch ergeben sich aber bei nicht ganz ideal ecklastabgeglichener Waage Ecklastfehler.

Außerdem ist ein Erkennungssystem mit einer Antennenvorrichtung aus der EP-A-589 534 bekannt. Dieses Erkennungssystem kann auch mit einer Wiegevorrichtung kombiniert sein, wobei jedoch durch eine Metallplatte zwischen der Antennenvorrichtung und der Wiegevorrichtung eine Rückwirkung der Antennenvorrichtung auf die Wiegevorrichtung verhindert wird.

Aufgabe der Erfindung ist es daher, eine Anordnung der Antenne anzugeben, die sowohl für kleine als auch für große Wägeobjekte geeignet ist.

Erfindungsgemäß wird dies dadurch erreicht, dass die Antenne in einer horizontaler Ebene in oder unter der Waagschale angeordnet ist und dass die Waagschale aus einem elektrisch schlecht leitenden Material besteht.

Durch die horizontale Anordnung in oder unter der Waagschale wird die Größe des Wägeobjektes nicht beschränkt und auch bei kleinen Wägeobjekten wird der Bediener der Waage intuitiv diese Wägeobjekte mittig auf die Waagschale stellen. Die Waagschale aus elektrisch schlecht leitendem Material macht diese Anordnung der Antenne möglich. Übliche metallische Waagschalen würden die Antenne in dieser Anordnung zu stark bedämpfen. Andererseits sorgt die geringe Restleitfähigkeit der Waagschale dafür, dass eine elektrostatische Aufladung der Waagschale und des Wägeobjektes verhindert wird.

Vorteilhafte Ausgestaltungen ergeben sich aus den abhängigen Ansprüchen

Die Erfindung wird im Folgenden anhand der schematischen Zeichnungen beschrieben. Dabei zeigt:
- Figur 1: eine perspektivische Ansicht einer ersten Ausgestaltung der Waage,
- Figur 2: einen vertikalen Schnitt durch die Waage aus Figur 1,
- Figur 3: einen vertikalen Schnitt durch eine zweite Ausgestaltung der Waage und
- Figur 4: einen vertikalen Schnitt durch eine dritte Ausgestaltung der Waage.

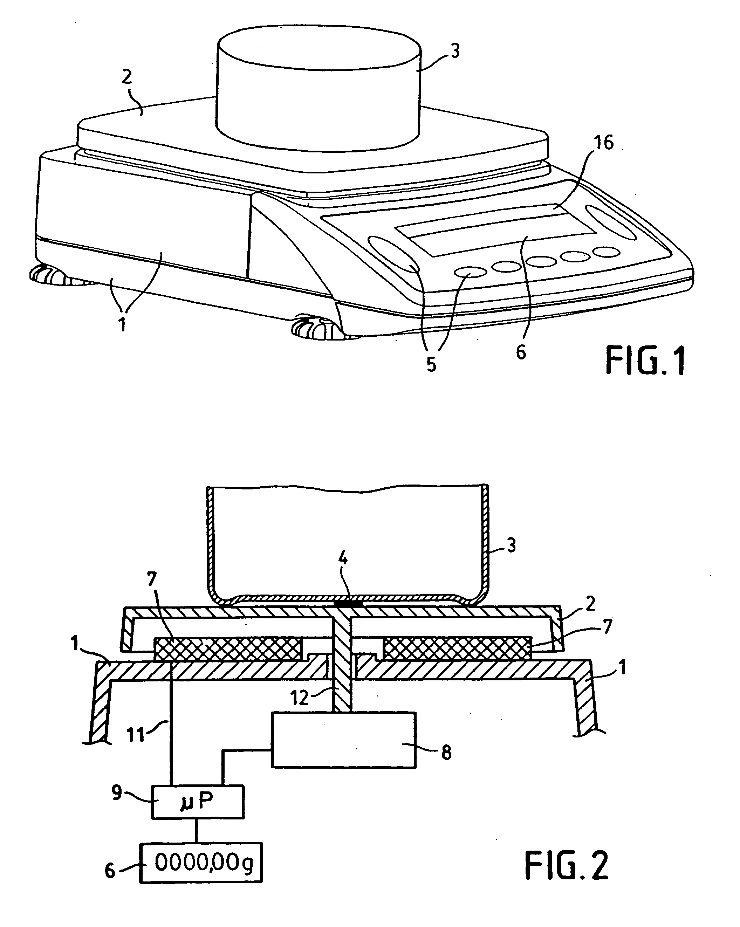

Eine erste Ausgestaltung der Waage ist in den Figuren 1 und 2 dargestellt. In der perspektivischen Ansicht in Figur 1 erkennt man ein Waagengehäuse 1, eine Waagschale 2 mit einem darauf stehenden Wägeobjekt 3, eine Anzeige 6 und Bedientasten 5. - Waagen dieser Art sind allgemein bekannt und müssen daher in ihrem Aufbau und in ihrer Funktion nicht im Einzelnen erläutert werden. Die erfindungsgemäße Neuerung der Waage ist erst in der Schnittdarstellung der Figur 2 erkennbar: Unter der Waagschale 2 verborgen befindet sich eine Antenne 7 auf der Oberseite des Gehäuses 1. Außerdem ist auf der Unterseite des Wägeobjektes 3 ein Transponder 4 angebracht. Weiterhin besteht die Waagschale 2 aus einem elektrisch schlecht leitenden Material. Übliche metallische Waagschalen würden die Antenne nach oben hin völlig abschirmen. Das elektrisch schlecht leitende Material der Waagschale 2 verhindert diesen Abschirmeffekt. Trotzdem bleibt eine geringe elektrische Leitfähigkeit, sodass eine elektrostatische Aufladung der Waagschale und damit auch der Wägeobjekte vermieden wird. Der elektrische Anschluss der Antenne 7 ist der Übersichtlichkeit halber in Figur 2 ganz schematisch mit 11 eingezeichnet. Ebenso ist der Wägeaufnehmer 8, auf den sich die Waagschale 2 über einen Zapfen 12 abstützt, nur ganz schematisch eingezeichnet. Die Wägeergebnisse vom Wägeaufnehmer 8 werden in der Elektronik 9 der Waage weiterverarbeitet und dann zur Anzeige 6 geleitet. Die Ansteuerung der Antenne 7 als Sendeantenne oder als Empfangsantenne erfolgt ebenfalls durch die Elektronik 9.

Sendet die Antenne 7 ein Hochfrequenzsignal als Abfragesignal aus, so wird dieses Signal vom Transponder 4 empfangen und in bekannter Weise antwortet dieser darauf mit einem codierten Antwortsignal, aus dem die im Transponder gespeicherten Daten ersichtlich sind. Dieses Antwortsignal empfängt die Antenne 7 und leitet es der Elektronik 9 zu. In entsprechender Weise kann die Elektronik durch ein codiertes Einspeichersignal Daten im Transponder 4 neu einspeichern bzw. ändern. Einzelheiten der elektronischen Kommunikation mit dem Transponder sind jedem Fachmann bekannt, sodass sie hier nicht im Einzelnen erläutert werden müssen.

Die im Transponder gespeicherten Daten können z. B. sein:
- der Tarawert des Gefäßes,
- für die Stückzählung zusätzlich das Gewicht eines einzelnen Teiles,
- für Rückwägungen zusätzlich die Probenmasse am Anfang des Prozesses,
- Identifikations-Nummern,
- die chemische Bezeichnung der Substanz im Behälter (diese Bezeichnung kann z. B. in der oberen Zeile 16 der Waagenanzeige zur Kontrolle angezeigt werden),
- bei Langzeitmessungen: alle alten Messergebnisse.

Weist die Waage ein Konfigurationsmenü auf, so können im Transponder auch Daten gespeichert sein, die die Waageneinstellung im Rahmen dieses Konfigurationsmenüs verändern. Bei Zählwaagen beispielsweise kann bei kleinen Einzelgewichten eine längere Integrationszeit ausgewählt werden als bei großen Einzelgewichten. Diese Eingriffsmöglichkeit in das Konfigurationsmenü kann beispielsweise auch dazu benutzt werden, um schnell und bequem eine persönliche Einstellung für jeden Benutzer der Waage zu realisieren. Dazu bekommt jeder Benutzer der Waage einen Transponder, auf dem seine persönliche Konfiguration der Waage abgespeichert ist. Ist dieser Transponder flach ausgebildet, so kann er z. B. auf einen Betriebsausweis aufgeklebt oder in diesen integriert werden. Durch das Auflegen seines Betriebsausweises auf die Waagschale stellt damit jeder Benutzer der Waage diese auf seine gewohnte Konfiguration ein. Dies ist besonders in Laboren mit einer großen Zahl von Waagen und vielen Benutzern vorteilhaft: Jeder Benutzer kann jede freie Waage benutzen und stellt sie nur durch Auflegen seines Betriebsausweise auf seine gewohnte Konfiguration ein.

Diese geschilderten Anwendungsfälle sind selbstverständlich nur Beispiele, was man alles mit der beschriebenen Hardware realisieren kann.

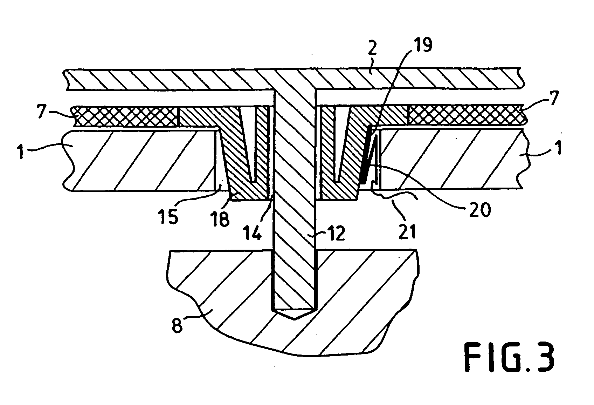

In Figur 3 ist eine zweite Ausgestaltung der Waage im vertikalen Schnitt dargestellt. Gleiche Teile wie in Figur 2 sind mit den gleichen Bezugszahlen gekennzeichnet und werden nicht noch mal erläutert. In Figur 3 ist gezeigt, wie die Antenne 7 herausnehmbar am Gehäuse 1 der Waage befestigt werden kann. Dazu weist die Antenne mittig einen Stecker 18 auf, der in einen Durchbruch 15 im Gehäuse 1 passt. Der Stecker 18 weist an seinem Umfang mehrere Kontakte 19 auf (von denen in Figur 3 nur einer erkennbar ist), die mit elektrischen Gegenkontakten 20 am Rande des Gehäusedurchbruches die elektrische Verbindung herstellen. Die im Gehäuse der Waage weiterführenden Verbindungsleitungen 21 zur Elektronik sind in Figur 3 nur angedeutet. Der Stecker weist weiterhin ein mittiges Loch 14 auf, durch das der Zapfen 12 der Waagschale 2 berührungslos hindurchpasst. - Durch diese Bauart kann die Antenne 7 leicht aus dem Waagengehäuse 1 herausgenommen werden - z. B. zum Säubern des Waagengehäuses - und bei Wiedereinsetzen wird automatisch die elektrische Verbindung wieder hergestellt. Dadurch ist auch eine leichte Nachrüstbarkeit von Waagen mit einer Antenne für Transponder gewährleistet.

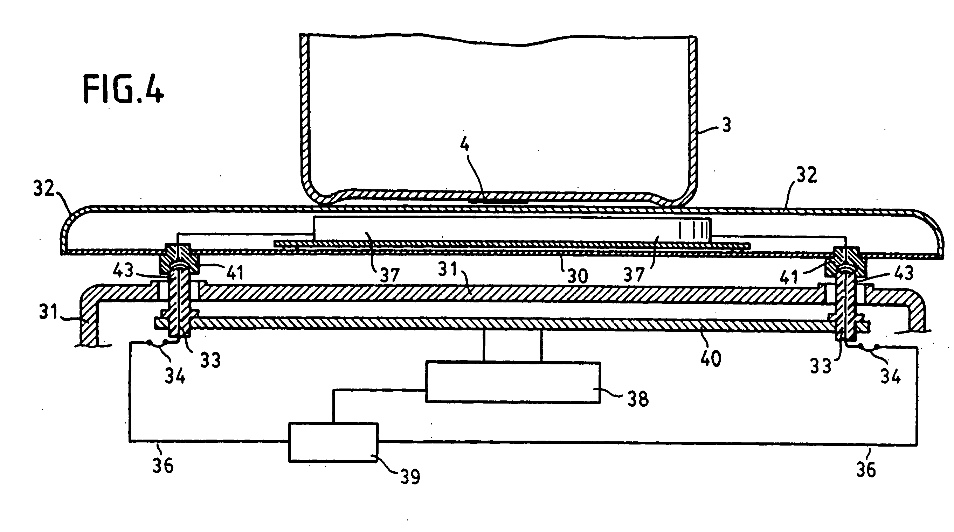

In Figur 4 ist eine dritte Ausgestaltung der Waage im vertikalen Schnitt dargestellt. In dieser Ausgestaltung ist die Antenne 37 auf einer Platte 30 unterhalb der Waagschale 32 angebracht. Die Waagschale 32 mit der Platte 30 stützt sich über isolierende Gummipuffer 43 und ebenfalls isolierende Gegenstücke 41 auf einer Quertraverse 40 ab, die sich wiederum auf dem - nur angedeuteten - Wägeaufnehmer 38 abstützt. Die Stromzuführungen von der Elektronik 39 zur Antenne 37 erfolgen über die gehäusefesten Leitungen 36, über flexible Verbindungen 34, über Stromdurchführungen 33 im Inneren der isolierenden Gummipuffer 43 und über Stromdurchführungen in den isolierenden Gegenstücken 41. Die Stromdurchführungen 33 im Inneren der Gummipuffer 43 enden auf ihrer Oberseite in Kontaktplättchen; ebenso tragen die Gegenstücke 41 Kontaktplättchen auf ihrer Unterseite. - Durch diesen Aufbau der Stromzuführungen kann die Waagschale 32 (incl. Platte 30) abgehoben und z. B. gesäubert werden und beim Wiederauflegen wird die elektrische Verbindung zu der Antenne 37 automatisch wieder hergestellt.

Das Material der Waagschale 32 und auch der Platte 30 ist wieder elektrisch schlecht leitend. Die (hochohmige) Erdung von Waagschale und Platte erfolgt durch eine dritte, in Figur 4 nicht mit eingezeichnete Stromdurchführung, die im Wesentlichen genauso aufgebaut ist wie die beiden beschriebenen Stromdurchführungen für die Antenne 7.

Die Waagschale 32 in Figur 4 kann selbstverständlich auch von der Platte 30 abnehmbar sein. In diesem Fall wird aus der Platte 30 eine gesonderte Unterschale. Die Antenne 37 kann dann entweder an der Unterseite der Waagschale 32 oder an der Unterschale befestigt sein.

## Patentansprüche

1. Waage mit einer Waagschale (2, 32), mit einem Wägeaufnehmer (8, 38), mit einem Gehäuse (1, 31), das den Wägeaufnehmer (8, 38) umschließt, und mit einer Antenne (7, 37) zur Identifikation eines mit einem Transponder (4) ausgerüsteten Wägeobjektes (3), **dadurch gekennzeichnet, dass** die Antenne (7,37) in einer horizontalen Ebene in oder unter der Waagschale (2,32) angeordnet ist und dass die Waagschale (2, 32) aus einem elektrisch schlecht leitenden Material besteht.

2. Waage nach Anspruch 1, **dadurch gekennzeichnet, dass** die Antenne (37) auf der Unterseite der Waagschale (32) angeordnet ist.

3. Waage nach Anspruch 1, **dadurch gekennzeichnet, dass** die Antenne (7) auf der Oberseite des Gehäuses (1) unterhalb der Waagschale (2) angeordnet ist.

4. Waage nach Anspruch 3, **dadurch gekennzeichnet, dass** die Antenne (2) einen Stecker (18) mit mehreren Kontakten (19) aufweist, der mit entsprechenden Gegenkontakten (20) an einem Gehäusedurchbruch (15) eine elektrische Verbindung herstellt, und dass der Stecker (18) ein vertikales Loch (14) aufweist, durch das eine mechanische Verbindung zwischen der Waagschale (2) und dem Lastaufnehmer des Wägeaufnehmers (8) hergestellt werden kann, ohne den Stecker (18) zu berühren.

5. Waage nach Anspruch 1, **dadurch gekennzeichnet, dass** die Antenne an einer Unterschale befestigt ist.

6. Waage nach einem der Ansprüche 1 bis 5, **dadurch gekennzeichnet, dass** im Transponder (4) auch Daten gespeichert sind, die die Konfiguration der Waage im Rahmen eines Menüs verändern.

## Claims

1. Scales with a weighing pan (2, 32), with a weight pick-up (8, 38), with a housing (1, 31) enclosing the weight pick-up (8, 38) and with an antenna (7, 37) for identification of an object (3), which is to be weighed, equipped with a transponder (4), **characterised in that** the antenna (3, 37) is arranged in a horizontal plane in or below the weighing pan (2, 32) and that the weighing pan (2, 32) consists of a material with poor electrical conductivity.

2. Scales according to claim 1, **characterised in that** the antenna (37) is arranged on the underside of the weighing pan (32).

3. Scales according to claim 1, **characterised in that** the antenna (7) is arranged on the upper side of the housing (1) below the weighing pan (2).

4. Scales according to claim 3, **characterised in that** the antenna (2) has plug (18) with several contacts (19) which produce an electrical connection with corresponding counter-cohtacts (20) at a housing passage (15), **in that** the plug (18) has a vertical hole (14) through which a mechanical connection between the weighing pan (2) and the load receiver of the weight pick-up (8) can be produced without contacting the plug (18).

5. Scales according to claim 1, **characterised in that** the antenna is fastened to an undertray.

6. Scales according to one of claims 1 to 5, **characterised in that** data which change the configuration of the scales within the scope of a menu are also stored in the transponder (4).

## Revendications

1. Balance comportant un plateau de balance (2, 32), un capteur de pesée (8, 38), un boîtier (1, 31) qui entoure le capteur de pesée (8, 38), et une antenne (7, 37) destinée à l'identification d'un objet à peser (3) équipé d'un transpondeur (4), **caractérisée en ce que** l'antenne (7, 37) est disposée dans un plan horizontal dans ou sous le plateau de balance (2, 32), et **en ce que** le plateau de balance (2, 32) est constitué d'un matériau de mauvaise conductibilité électrique.

2. Balance selon la revendication 1, **caractérisée en ce que** l'antenne (37) est disposée sur la face inférieure du plateau de balance (32).

3. Balance selon la revendication 1, **caractérisée en ce que** l'antenne (7) est disposée sur la face supérieure du boîtier (1) au-dessous du plateau de balance (2).

4. Balance selon la revendication 3, **caractérisée en ce que** l'antenne (2) comporte un connecteur (18) avec plusieurs contacts (19), qui établit une liaison électrique avec des associés antagonistes (20) correspondants au niveau d'une percée (15) de boîtier, et **en ce que** le connecteur (18) comporte un trou vertical (14), à travers lequel une liaison mécanique peut être établie entre le plateau de balance (2) et l'enregistreur de charge du capteur de pesée (8) sans contact avec le connecteur (18).

5. Balance selon la revendication 1, **caractérisée en ce que** l'antenne est fixée sur un plateau inférieur.

6. Balance selon l'une des revendications 1 à 5, **caractérisée en ce que** des données sont également mémorisées dans le transpondeur (4), lesquelles données modifient la configuration de la balance dans le cadre d'un menu.
